# EUROPEAN PATENT SPECIFICATION

(11) **EP 3 502 194 B1**
(45) Date of publication and mention of the grant of the patent: **15.07.2020**
(21) Application number: 17275198.4
(22) Date of filing: 22.12.2017
(51) Int. Cl.: C09C 1/42, C09C 1/40

(54) **METHOD OF PREPARATION OF ANTIMICROBIAL AGENT TREATED INORGANIC PARTICULATE MATERIAL**
BEHANDELTE ANORGANISCHE PARTIKULÄRE MATERIALIEN UND VERFAHREN ZU DEREN HERSTELLUNG
MATÉRIAUX PARTICULAIRES INORGANIQUES TRAITÉS ET LEURS PROCÉDÉS DE PRÉPARATION

(43) Date of publication of application: 26.06.2019
(73) Proprietor: IMERTECH SAS, 75015 Paris (FR)
(72) Inventor: Anjard, Ophelie, St.Ansell, PL25 3EB (GB); Elton-Legrix, Anabelle, St. Austell Cornwall PL26 7QL (GB); Eade, Robert, St. Austell, PL255AR (GB); Hearle, Jonathan, Falmouth Cornwall, TR11 3RS (GB)
(74) Representative: Haseltine Lake Kempner LLP

(56) References cited:
- WO-A1-2017/029482
- CN-A- 101 347 124
- KAMYAR SHAMELI ET AL: "Synthesis and characterization of silver/talc nanocomposites using the wet chemical reduction method", INTERNATIONAL JOURNAL OF NANOMEDICINE, 1 September 2010 (2010-09-01), page 743, XP055484780, DOI: 10.2147/IJN.S13227
- F. KAREL ET AL.: "Development of silver ion doped antibacterial clays and investigation of their antibacterial activity", ADVANCES IN MATERIALS SCIENCE AND ENGINEERING, vol. 2015, 2 February 2015 (2015-02-02), pages 1-6, XP002782074,
- N. PESSAHNA ET AL.: "Preparation and characterization of silver/organoclay nanocomposites", CHEMICAL AND MATERIALS ENGINEERING, vol. 2, no. 8, 2014, pages 173-178, XP002782075,

## Description

### FIELD OF THE INVENTION

Embodiments of the present disclosure relate generally to treatment of inorganic particulate materials with an antimicrobial agent, including the preparation of such materials and use thereof.

### BACKGROUND

Inorganic particulate materials have long been treated with agents of various kinds, including anti-microbial agents. Such treatments have primarily been performed in a solution, such as an aqueous solution, in order to allow sufficient time for cation exchange. The solution method then requires removal of the solvent introduced with the solution from the inorganic particulate material. In particular, the treatment of inorganic particulate materials, such as kaolin, with an anti-microbial agent is typically performed by impregnating the inorganic particulate material with a solution containing the anti-microbial agent.

Thus, given the inefficiencies, added complexity and increased cost of solution based treatments of inorganic particulate materials, there is an incentive to discover and develop other methods for treating inorganic particulate materials. WO 2017/029482 discloses inorganic particulates containing antimicrobial metal. CN 101347124 discloses a method for preparing silver-carying ion and copper ion kaolin anti-bacterial agents. K. Shameli et al. disclose the synthesis and characterization of silver/talc nanocomposites using the wet chemical reduction method (Int. J. Nanomedicine, 2010, 5, 743-751).

### SUMMARY OF THE DISCLOSURE

The present disclosure includes a method of treating an inorganic particulate material with an antimicrobial agent, including: introducing a first feed including the inorganic particulate material and water to an air swept dryer; introducing a second feed including the antimicrobial agent to the air swept dryer; and at least partially drying the inorganic particulate material of the first feed in the presence of the antimicrobial agent of the second feed forming a treated inorganic particulate material, wherein at least a portion of the antimicrobial agent is exchanged onto and/or into the surface of the inorganic particulate material.

The inorganic particulate material is a particulate phyllosilicate mineral.

The antimicrobial agent includes a metal, or metal salt, selected from the group consisting of silver, copper, zinc and combinations thereof.

In a further aspect of the disclosure, the inorganic particulate material introduced in the first feed is in the form of a powder having a median particle size by laser scattering D50 of less than about 5 microns.

In a further aspect of the disclosure, the inorganic particulate material introduced in the first feed is in the form of lumps having an average aggregate size of about 1 to about 3 cm.

In a further aspect of the disclosure, the inorganic particulate material introduced in the first feed is in the form of a spray dried material having an average aggregate size of about 50 to about 250 microns.

A further aspect of the disclosure includes a method of treating an inorganic particulate material with an antimicrobial agent, including: at least partially pulverizing and drying the inorganic particulate material having an average aggregate size of about 1 to about 3 centimeters in the presence of the antimicrobial agent, and in the presence of less than about 25 wt% water forming a treated inorganic particulate material; wherein at least a portion of the antimicrobial agent is exchanged onto the surface and/or into the pores of the treated inorganic particulate material.

### BRIEF DESCRIPTION OF THE DRAWINGS

The accompanying drawings, which are incorporated in and constitute a part of this specification, illustrate various exemplary aspects of the disclosure, and together with the description, serve to explain the principles of the present disclosure.
Figure 1 is a schematic view of an inorganic particulate processing system in accordance with an embodiment of the present disclosure.
Figure 2 is a schematic view of an inorganic particulate processing system in accordance with an embodiment of the present disclosure.

### DETAILED DESCRIPTION

Particular aspects of the present disclosure are described in greater detail below. The terms and definitions provided herein control, if in conflict with terms and/or definitions incorporated by reference.

In the Summary above and in the Detailed Description, and the claims below, and in the accompanying drawings, reference is made to particular features (including method steps) of the disclosure. It is understood that the present disclosure includes all possible combinations of such particular features. For example; where a particular feature is disclosed in the context of a particular aspect or embodiment, or a particular claim, that feature can also be used, to the extent possible in combination with and additionally or alternatively in the context of other particular aspects or embodiments of the disclosure and, in the disclosure generally.

As used herein, the terms "comprises," "comprising," or any other variation thereof are intended to cover a non-exclusive inclusion, such that a process, method, composition, article, or apparatus that comprises a list of elements does not include only those elements, but may include other elements not expressly listed or inherent to such process, method, composition, article, or apparatus. The term "exemplary" is used in the sense of "example" rather than "ideal."

As used herein, the singular forms "a," "an," and "the" include plural reference unless the context dictates otherwise. The terms "approximately" and "about" refer to being nearly the same as a referenced number or value. As used herein, the terms "approximately" and "about" should be understood to encompass ± 5% of a specified amount or value.

When a range is used herein as "ranging from (a first number)" to (a second number)," "between (a first number) and (a second number)," or "(a first number)-(a second number)," this refers to a range whose lower limit is the first number, and whose upper limit is the second number. As used herein, the term "at least" followed by a number denotes the start of a range beginning with that number, which may be a range having an upper limit or no upper limit depending on the variable term being defined. For example, "at least 1" includes 1 and more than 1.

### Particle Size Distribution (PSD)

The particle size of powder is defined by laser diffraction. A parallel laser beam passes through a dispersed particulate sample suspended in air and the angular variation in intensity of the scattered light is measured. Small particles scatter light at large angles relative to the initial laser beam and large particles scatter light at smaller angles. The angular scattering intensity data is then analyzed using Fraunhofer light scattering theory to calculate the size of the particles. The median particle size is defined by the value D50, wherein 50 percent (by volume) of the particle population has a size below the D50 value. D50 is the median average spherical diameter of the particles.

The present disclosure includes processes and systems for treating inorganic particulate materials with an anti-microbial agent and comprises, consists of, or consists essentially of : i) introducing a first feed comprising the inorganic particulate material and water to an air swept dryer; ii) introducing a second feed comprising the antimicrobial agent to the air swept dryer; and iii) at least partially drying the inorganic particulate material of the first feed in the presence of the antimicrobial agent of the second feed forming a treated inorganic particulate material, wherein at least a portion of the antimicrobial agent is exchanged onto and/or into the surface of the treated inorganic particulate material. The second feed can be an aqueous feed or a dry feed.

In accordance with an embodiment, the inorganic particulate material introduced in the first feed can be in the form of a powder having a median particle size as a dry suspension by light scattering (hereinafter referred to as "D₅₀") of less than about 5 or less than about 4 or less than about 3, or less than about 2 or less than about 1 microns. In accordance with this embodiment, the at least partial drying the inorganic particulate material of the first feed in the presence of the antimicrobial agent of the second feed is in the presence of water in the range of from about 0.1 to about 10 or about 1 to about 8 or about 3 to about 7 wt% water.

In accordance with an embodiment, the inorganic particulate material introduced in the first feed can be in the form of a spray dried material having an average aggregate size of about 50 to about 250, or about 70 to about 230, or about 100 to about 200 microns. In accordance with this embodiment, the at least partial drying the inorganic particulate material of the first feed in the presence of the antimicrobial agent of the second feed is in the presence of water in the range of from about 0.2 to about 15 or about 1 to about 11 or about 3 to about 10 wt% water.

In accordance with an embodiment, the inorganic particulate material introduced in the first feed can be in the form of lumps having an average aggregate size of about 1 to about 3 cm, or of about 1.2 to about 2.7 cm, or of about 1.5 to about 2.5 cm. The inorganic particulate material can be at least partially pulverized in the air swept dryer forming the treated inorganic particulate material in the form of powder with a D₅₀ of less than about 5 or less than about 4 or less than about 3 or less than about 2 microns. In accordance with this embodiment, the at least partial drying the inorganic particulate material of the first feed in the presence of the antimicrobial agent of the second feed is in the presence of water in the range of from about 5 to about 25 or about 10 to about 23 or about 13 to about 20 wt% water.

In accordance with an embodiment, the first feed can contain from about 0.1 to about 20 wt% water. For inorganic particulate materials in the form of a powder as described herein, the first feed can contain from about 0.1 to about 2, or about 0.3 to about 1.5 or about 0.5 to about 1 wt% water. For inorganic particulate materials in the form of a spray dried material as described herein, the first feed can contain from about 0.1 to about 5, or about 0.2 to about 3 or about 0.3 to about 2 wt% water. For inorganic particulate materials in the form of lumps as described herein, the first feed can contain from about 5 to about 20, or about 7 to about 18 or about 8 to about 15 wt% water.

In accordance with an embodiment, a method of treating an inorganic particulate material with an antimicrobial agent, comprises, consists of, or consists essentially of: i) at least partially pulverizing and drying the inorganic particulate material having a median particle size by laser scattering D₅₀ of less than about 5 or less than about 4 or less than about 3 , or less than about 2 or less than about 1 microns in the presence of the antimicrobial agent, and in the presence of about 0.1 to about 10 or about 1 to about 8 or about 3 to about 7 wt% water forming a treated inorganic particulate material; wherein at least a portion of the antimicrobial agent is exchanged onto the surface and/or into the pores of the treated inorganic particulate material.

In accordance with an embodiment, a method of treating an inorganic particulate material with an antimicrobial agent, comprises, consists of, or consists essentially of: i) at least partially pulverizing and drying the inorganic particulate material having an average aggregate size of about 50 to about 250, or about 70 to about 230, or about 100 to about 200 microns in the presence of the antimicrobial agent, and in the presence of from about 0.2 to about 15 or about 1 to about 11 or about 3 to about 10 wt% water forming a treated inorganic particulate material; wherein at least a portion of the antimicrobial agent is exchanged onto the surface and/or into the pores of the treated inorganic particulate material.

In accordance with an embodiment, a method of treating an inorganic particulate material with an antimicrobial agent, comprises, consists of, or consists essentially of: i) at least partially pulverizing and drying the inorganic particulate material having an average aggregate size of about 1 to about 3, or about 1.2 to about 2.7 cm, or about 1.5 to about 2.5 cm in the presence of the antimicrobial agent, and in the presence of less than about 25 or 23 or 20 wt% water forming a treated inorganic particulate material; wherein at least a portion of the antimicrobial agent is exchanged onto the surface and/or into the pores of the treated inorganic particulate material.

In accordance with an embodiment, the first and second feeds can be combined prior to introduction to the air swept dryer.

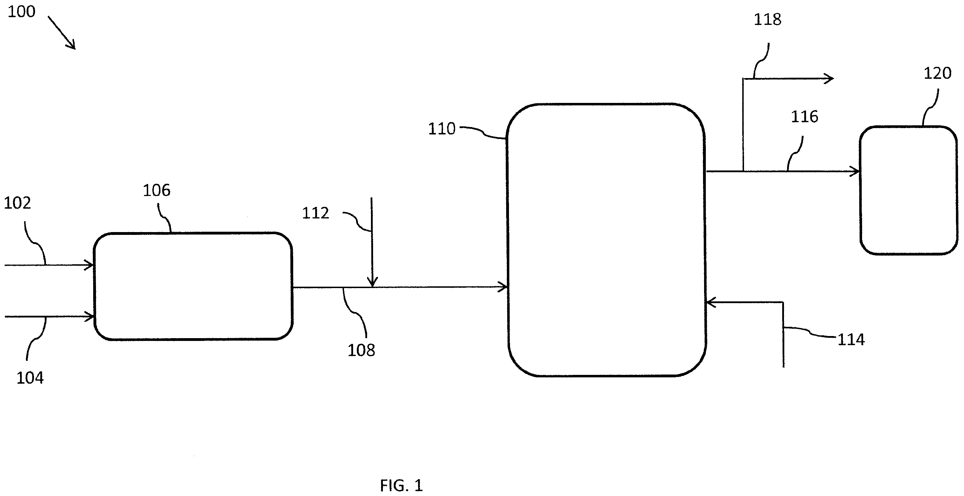

With reference to Figure 1, a process and system 100 is disclosed in accordance with an embodiment of the disclosure wherein an air feed 102 and a burner fuel feed 104 are charged to a burner 106. A combustion gas then passes via gas stream line 108 from burner 106 to air swept dryer 110. The inorganic particulate material is introduced to gas stream line 108 for contact with the combustion gas via line 112. The combustion gas and inorganic particulate material are then passed to air swept dryer 110 via line 108. The inlet temperature of the combustion gas and inorganic particulate material passed to air swept dryer 110, as referred to in the description and examples, is measured in line 108 at the entrance to air swept dryer 110. The antimicrobial agent is introduced to air swept dryer 110 via line 114, and a treated inorganic particulate material is removed along with the combustion gas from the air swept dryer 110 via line 116. The outlet temperature from the air swept dryer 110, as referred to in the description and examples, is measured in line 116 at the exit from air swept dryer 110. The combustion gas is separated from the treated inorganic particulate material via line 118 and the treated inorganic particulate material is passed to bag filter 120 via line 116 for collection. The inorganic particulate material can also be pulverized in the air swept dryer 110 along with being dried.

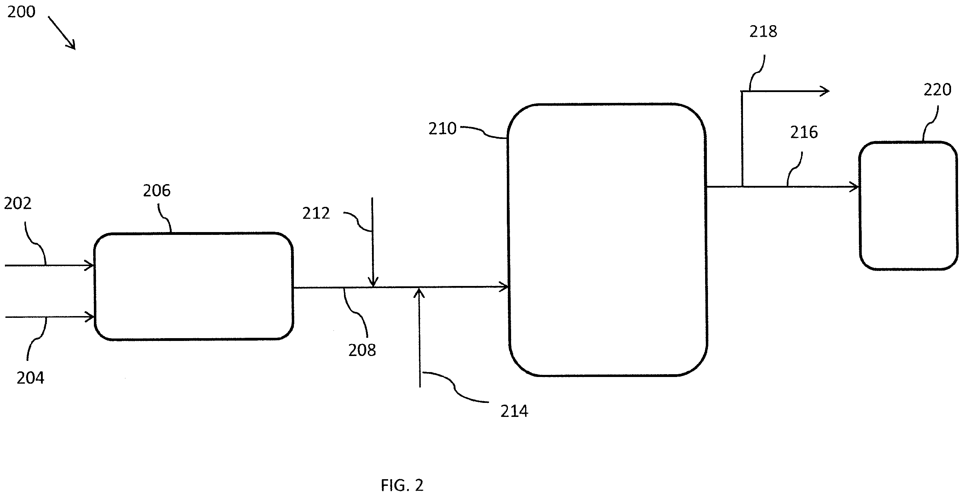

With reference to Figure 2, a process and system 200 is disclosed in accordance with an embodiment of the disclosure wherein an air feed 202 and a burner fuel feed 204 are charged to a burner 206. A combustion gas then passes via gas stream line 208 from burner 206 to air swept dryer 210. The inorganic particulate material is introduced to gas stream line 208 via line 212; and an antimicrobial agent is introduced to gas stream line 208 via line 214. The combustion gas, inorganic particulate material and antimicrobial agent are then passed to air swept dryer 210 via line 208. The inlet temperature of the combustion gas, inorganic particulate material and antimicrobial agent passed to air swept dryer 210, as referred to in the description and examples, is measured in line 208 at the entrance to air swept dryer 210. A treated inorganic particulate material is removed along with the combustion gas from the air swept dryer 210 via line 216. The outlet temperature from the air swept dryer 210, as referred to in the description and examples, is measured in line 216 at the exit from air swept dryer 210. The combustion gas is separated from the treated inorganic particulate material via line 218 and the treated inorganic particulate material is passed to bag filter 220 via line 216 for collection. The inorganic particulate material can also be pulverized in the air swept dryer 210 along with being dried.

In accordance with the embodiments disclosed in the instant application, the inorganic particulate material is a particulate phyllosilicate mineral. The particulate phyllosilicate mineral can be selected from the group consisting of kaolin, talc, mica, bentonite, and combinations thereof.

In accordance with the embodiments disclosed in the instant application, the antimicrobial agent comprises a metal or metal salt selected from the group consisting of silver, copper, zinc and combinations thereof. The antimicrobial agent can comprise silver nitrate.

In accordance with an embodiment, the treated inorganic particulate material can comprise less than about 2 wt% or less than 1 wt% or less than 0.5 wt% water, and at least about 10 microgram/gram (µg/g) or at least about 100 µg/g or at least about 0.1 wt% or at least about 0.5 wt% or at least about 0.8 wt% or at least about 1 wt% of the antimicrobial agent.

In accordance with an embodiment, the outlet temperature from the air swept dryer can be in the range of from about 50 to about 200°C, or about 60 to about 150°C, or about 80 to about 130°C.

In accordance with an embodiment, the antimicrobial agent can be added to the inorganic particulate material during the pulverizing and drying.

### EXAMPLES

The following examples are intended to illustrate the present disclosure without, however, being limiting in nature. It is understood that the present disclosure encompasses additional aspects and embodiments consistent with the foregoing description and following examples.

A kaolin feed having 8.5% moisture was used in the following trials as described in Table 1. The kaolin feed was charged to an air swept dryer (which was an Atritor cell-mill) at a rate of 125 kg/hr at an inlet temperature of 180°C along with a combustion gas. A silver nitrate solution was then added into the air-swept dryer and mixed along with the kaolin. The dried treated kaolin was then collected with an outlet temperature of 90°C. The final product was tested for the silver content using XRF-Protrace. Three different concentrations were made: 200, 500, 1000 µg Ag/g kaolin with the addition of different volume of solution for 200µg Ag/g kaolin. The leaching of silver on the treated kaolin was tested, to make sure the metal was exchanged onto and/or into the surface of the mineral by placing 10g of the sample in 100mL water for 30 minutes, filtered and then the amount of silver on the dry powder was measured by XRF-Protrace with an error of ±10 µg/g. The results are shown in Table 1 below.

**TABLE 1**

| Target Ag µg/g of kaolin | Target AgNO₃ µg/g | AgNO₃ Solution strength wt% | Volume added mL/min | Treated Kaolin Ag µg/g measured | Treated Kaolin Ag µg/g after leaching |
|---|---|---|---|---|---|
| 200 | 310 | 0.6 | 101 | 190 | 179 |
| | | 1.5 | 40 | 173 | 173 |
| | | 3 | 20 | 170 | 174 |
| 500 | 790 | 1.5 | 101 | 439 | 428 |
| 1000 | 157 | 3 | 101 | 902 | 828 |

The addition of an increasing volume of AgNO₃ solution did not influence the final moisture that was at ∼0.6wt% for each of the runs, and did not influence the exchange of silver into the kaolin as the concentrations and leaching were similar for 20, 40, and 101mL of solution injected per minute for a concentration of 200µg/g,

The antibacterial efficiency of the treated kaolin was tested in a matt paint reference formulation for in-can stability at different levels. Seven different paints were made and tested for their stability against bacteria. Paints A-D were controls: A and B containing biocides whereas C and D did not contain any biocides. Paints E and F contained silver treated kaolin made at a laboratory scale. The treatment was made by adding a solution of silver nitrate to a dry kaolin in a mixer, followed by drying the mixture and pulverizing the final product.

A test of sterility was made prior to the in-can challenge test to make sure that none of the Paints A-F were contaminated prior to testing. The test consisted of placing 0.1 g (equal to around 0.1 ml) of the Paints A-F on the following culture media:
- Tryptic Soy Agar (TSA) for bacterial counts (incubation: 5 days at 30°C ± 2°C)
- Malt Extract + Chloramphenicol agar, selective medium for yeast and mould counts (incubation: 5 days at 23°C ± 2°C).

The microbial counts are expressed in "colony forming units" per gram or per milliliter of product (CFU/g or CFU/ml) and 10CFU/g is the detection limit. All samples were below 10 CFU/g.

An in-can test was performed in order to test the antibacterial properties of the treated kaolin in paint. This test follows the method for evaluating the resistance of water-based paints to bacterial growth in the wet-state developed by the international bio-deterioration research group (IBRG). For this test, samples were stored at ambient temperature for the duration of the test. Five (5) inoculations were performed once a week over six (6) weeks: 1ml of the inoculum was added to 50g of paint. The inoculum was composed of the described microorganism in Table 2.

**TABLE 2**

| **Microorganism** | **Reference** |
|---|---|
| **Bacteria** | |
| *Alcaligenes faecalis* | DSM 30030 |
| *Burkholderia cepacia* | ATCC 25146 |
| *Enterobacter aerogenes* | ATCC 13048 |
| *Proteus hauseri* | DSM 30118 |
| *Pseudomonas aeruginosa* | DSM 939 |
| *Pseudomonas fluorescens* | DSM 50090 |
| *Pseudomonas putida* | DSM 291 |

| **Yeast** | |
|---|---|
| *Candida lipolytica* | DSM 8218 |
| *Saccharomyces cerevisiae* | ATCC 2601 |

| **Mould** | |
|---|---|
| *Aspergillus brasiliensis* | ATCC 16404 |
| *Penicillium ochrochloron* | DSM 1945 |
| Inoculum concentration: bacteria ≈ 10⁸ CFU/ml yeast & mould ≈10⁶ CFU/ml | |

To assess contamination following each inoculation, a 0.1 ml amount of the sample was surface-plated in triplicate on the following culture media:
- Tryptic Soy Agar (TSA) for bacterial counts (incubation: 5-7 days at 30°C ± 2°C)
- Malt Extract + Chloramphenicol agar, selective medium for yeast and mould counts (incubation: 5-7 days at 23°C ± 2°C).

The results are summarized in Table 3 below.

**TABLE 3**

| | Paint A (control) | Paint B (control) | Paint C (control) | Paint D (control) | Paint E | Paint F |
|---|---|---|---|---|---|---|
| Biocide¹ wt% in Paint | 0.15 | 0.075 | 0 | 0 | 0 | 0 |
| Fungicide² wt% in Paint | 0.16 | 0.065 | 0 | 0 | 0 | 0 |
| Ag wt% in Treated Kaolin | -- | -- | -- | -- | 0.1 | 0.18 |
| Treated Kaolin in Paint, wt% | -- | -- | -- | -- | 5 | 5.55 |
| H^{g}/^{g} Ag in Paint | -- | -- | -- | -- | 50 | 100 |
| Sterility | <10CFU/g | <10CFU/g | <10CFU/g | <10CFU/g | <10CFU/g | <10CFU/g |
| Number of inoculations without contamination | I-5 | I-5 | I-3 | I-3 | I-5 | I-5 |

| | | | | | | |
|---|---|---|---|---|---|---|
| 1 - acticide MBS biocide 2 - Rocima 350 fungicide * I-5 - Optimal/good; I-4 - Moderate; I-3 - Inefficient | | | | | | |

It is intended that the specification and examples therein be considered as exemplary only, with a true scope and spirit of the present disclosure being indicated by the following claims.

## Claims

1. A method of treating an inorganic particulate material with an antimicrobial agent, comprising:
i) introducing a first feed comprising the inorganic particulate material and water to an air swept dryer;
ii) introducing a second feed comprising the antimicrobial agent to the air swept dryer; and
iii) at least partially drying the inorganic particulate material of the first feed in the presence of the antimicrobial agent of the second feed forming a treated inorganic particulate material, wherein at least a portion of the antimicrobial agent is exchanged onto and/or into the surface of the treated inorganic particulate material;
wherein the inorganic particulate material is a particulate phyllosilicate mineral;
wherein the antimicrobial agent comprises a metal or metal salt selected from the group consisting of silver, copper, zinc and combinations thereof.

2. A method according to claim 1 wherein the inorganic particulate material introduced in the first feed is in the form of a powder having a median particle size by laser scattering D₅₀ of less than about 5 microns.

3. A method according to claim 1 wherein the inorganic particulate material introduced in the first feed is in the form of lumps having an average aggregate size of about 1 to about 3 cm.

4. A method according to claim 1 wherein the inorganic particulate material introduced in the first feed is in the form of a spray dried material having an average aggregate size of about 50 to about 250 microns.

5. A method according to any of claims 2-4 further comprising at least partially pulverizing the inorganic particulate material in the presence of the antimicrobial agent in the air swept dryer forming the treated inorganic particulate material in the form of powder with a particle size D₅₀ of less than 5 microns.

6. A method according to claim 1 wherein the particulate phyllosilicate mineral is selected from the group consisting of kaolin, talc, mica, bentonite, and combinations thereof.

7. A method according to any of claims 1-6 wherein the antimicrobial agent comprises silver nitrate.

8. A method according to any of claims 1-7 wherein the second feed is aqueous.

9. A method according to any of claims 1-7 wherein the second feed is a dry feed.

10. A method according to any of claims 1-9 wherein the first and second feeds are combined prior to introduction to the air swept dryer.

11. A method according to any of claims 1-10 wherein the first feed contains from about 0.1 to about 20 wt% water.

12. A method according to any of claims 1-11 wherein the treated inorganic particulate material comprises less than about 2 wt% or less than 1 wt% or less than 0.5 wt% water, and at least about 10 µg/g or at least about 100 µg/g or at least about 0. 1 wt% or at least about 0. 5 wt% or at least about 0. 8 wt% or at least about 1 wt% of the antimicrobial agent.

13. A method according to any of claims 1-12 wherein the outlet temperature from the air swept dryer is in the range of about 50 to about 200°C.

## Patentansprüche

1. Verfahren zum Behandeln eines anorganischen teilchenförmigen Materials mit einem antimikrobiellen Mittel, umfassend:
i) Einführen eines ersten Ausgangsstoffs umfassend das anorganische teilchenförmige Material und Wasser in einen Luftstromtrockner;
ii) Einführen eines zweiten Ausgangsstoffs umfassend das antimikrobielle Mittel in den Luftstromtrockner; und
iii) mindestens teilweises Trocknen des anorganischen teilchenförmigen Materials des ersten Ausgangsstoffs in Anwesenheit des antimikrobiellen Mittels des zweiten Ausgangsstoffs zum Bilden eines behandelten anorganischen teilchenförmigen Materials, wobei mindestens ein Teil des antimikrobiellen Mittels auf und/oder in die Oberfläche des behandelten anorganischen teilchenförmigen Materials ausgetauscht wird;
wobei das anorganische teilchenförmige Material ein teilchenförmiges Schichtsilikat-Mineral ist; wobei das antimikrobielle Mittel ein Metall oder Metallsalz umfasst, das ausgewählt ist aus der Gruppe bestehend aus Silber, Kupfer, Zink und Kombinationen davon.

2. Verfahren gemäß Anspruch 1, wobei das anorganische teilchenförmige Material, das in den ersten Ausgangsstoff eingeführt wird, in Form eines Pulvers ist, das eine mittlere Teilchengröße durch Laserstreuung D₅₀ von weniger als etwa 5 Mikrometer aufweist.

3. Verfahren gemäß Anspruch 1, wobei das anorganische teilchenförmige Material, das in den ersten Ausgangsstoff eingeführt wird, in Form von Klumpen ist, die eine durchschnittliche Aggregatgröße von etwa 1 bis etwa 3 cm aufweisen.

4. Verfahren gemäß Anspruch 1, wobei das anorganische teilchenförmige Material, das in den ersten Ausgangsstoff eingeführt wird, in Form eines sprühgetrockneten Materials ist, das eine durchschnittliche Aggregatgröße von etwa 50 bis etwa 250 Mikrometer aufweist.

5. Verfahren gemäß einem der Ansprüche 2 bis 4, ferner umfassend ein mindestens teilweises Pulverisieren des anorganischen teilchenförmigen Materials in der Anwesenheit des antimikrobiellen Mittels in dem Luftstromtrockner, um das behandelte anorganische teilchenförmige Material in Form eines Pulvers mit einer Teilchengröße D₅₀ von weniger als 5 Mikrometer zu bilden.

6. Verfahren gemäß Anspruch 1, wobei das teilchenförmige Schichtsilikat-Mineral ausgewählt ist aus der Gruppe bestehend aus Kaolin, Talk, Glimmer, Bentonit und Kombinationen davon.

7. Verfahren gemäß einem der Ansprüche 1-6, wobei das antimikrobielle Mittel Silbernitrat umfasst.

8. Verfahren gemäß einem der Ansprüche 1-7, wobei der zweite Ausgangsstoff wässrig ist.

9. Verfahren gemäß einem der Ansprüche 1-7, wobei der zweite Ausgangsstoff ein trockener Ausgangsstoff ist.

10. Verfahren gemäß einem der Ansprüche 1-9, wobei der erste und der zweite Ausgangsstoff vor Einführen in den Luftstromtrockner kombiniert werden.

11. Verfahren gemäß einem der Ansprüche 1-10, wobei der erste Ausgangsstoff etwa 0,1 bis etwa 20 Gewichtsprozent Wasser enthält.

12. Verfahren gemäß einem der Ansprüche 1-11, wobei das behandelte anorganische teilchenförmige Material weniger als etwa 2 Gewichtsprozent oder weniger als 1 Gewichtsprozent oder weniger als 0,5 Gewichtsprozent Wasser und mindestens etwa 10 µg/g oder mindestens etwa 100 µg/g oder mindestens etwa 0,1 Gewichtsprozent oder mindestens etwa 0,5 Gewichtsprozent oder mindestens etwa 0,8 Gewichtsprozent oder mindestens etwa 1 Gewichtsprozent des antimikrobiellen Mittels enthält.

13. Verfahren gemäß einem der Ansprüche 1-12, wobei die Auslasstemperatur aus dem Luftstromtrockner in dem Bereich von etwa 50 bis etwa 200 °C ist.

## Revendications

1. Un procédé de traitement d'un matériau particulaire inorganique avec un agent antimicrobien, comprenant :
i) l'introduction d'une première charge comprenant le matériau particulaire inorganique et de l'eau dans un séchoir à balayage d'air ;
ii) l'introduction d'une deuxième charge comprenant l'agent antimicrobien dans le séchoir à balayage d'air ; et
iii) le séchage au moins partiel du matériau particulaire inorganique de la première charge en présence de l'agent antimicrobien de la deuxième charge formant un matériau particulaire inorganique traité, dans lequel au moins une partie de l'agent antimicrobien est échangée sur et / ou dans la surface du matériau particulaire inorganique traité ;
dans lequel le matériau particulaire inorganique est un minéral de phyllosilicate particulaire ;
dans lequel l'agent antimicrobien comprend un métal ou un sel métallique choisi dans le groupe constitué d'argent, cuivre, zinc et des combinaisons de ceux-ci.

2. Un procédé selon la revendication 1 dans lequel le matériau particulaire inorganique introduit dans la première charge est sous la forme d'une poudre ayant une granulométrie médiane par diffusion laser D₅₀ de moins d'environ 5 microns.

3. Un procédé selon la revendication 1 dans lequel le matériau particulaire inorganique introduit dans la première charge est sous la forme de grumeaux ayant une taille d'agrégat moyenne d'environ 1 à environ 3 cm.

4. Un procédé selon la revendication 1 dans lequel le matériau particulaire inorganique introduit dans la première charge est sous la forme d'un matériau séché par pulvérisation ayant une taille d'agrégat moyenne d'environ 50 à environ 250 microns.

5. Un procédé selon l'une quelconque des revendications 2 à 4 comprenant en outre la pulvérisation au moins partielle du matériau particulaire inorganique en présence de l'agent antimicrobien dans le séchoir à balayage d'air formant le matériau particulaire inorganique traité sous la forme de poudre avec une granulométrie D₅₀ de moins de 5 microns.

6. Un procédé selon la revendication 1 dans lequel le minéral de phyllosilicate particulaire est choisi dans le groupe constitué de kaolin, talc, mica, bentonite, et des combinaisons de ceux-ci.

7. Un procédé selon l'une quelconque des revendications 1 à 6 dans lequel l'agent antimicrobien comprend du nitrate d'argent.

8. Un procédé selon l'une quelconque des revendications 1 à 7 dans lequel la deuxième charge est aqueuse.

9. Un procédé selon l'une quelconque des revendications 1 à 7 dans lequel la deuxième charge est une charge sèche.

10. Un procédé selon l'une quelconque des revendications 1 à 9 dans lequel les première et deuxième charges sont combinées avant d'être introduites dans le séchoir à balayage d'air.

11. Un procédé selon l'une quelconque des revendications 1 à 10 dans lequel la première charge contient d'environ 0,1 à environ 20 % en poids d'eau.

12. Un procédé selon l'une quelconque des revendications 1 à 11 dans lequel le matériau particulaire inorganique traité comprend moins d'environ 2 % en poids ou moins de 1 % en poids ou moins de 0,5 % en poids d'eau, et au moins environ 10 µg/g ou au moins environ 100 µg/g ou au moins environ 0,1 % en poids ou au moins environ 0,5 % en poids ou au moins environ 0,8 % en poids ou au moins environ 1 % en poids de l'agent antimicrobien.

13. Un procédé selon l'une quelconque des revendications 1 à 12 dans lequel la température de sortie à partir du séchoir à balayage d'air est dans la plage d'environ 50 à environ 200 °C.
